# EUROPEAN PATENT APPLICATION

(11) **EP 4 029 830 A1**
(43) Date of publication of application: **20.07.2022**
(21) Application number: 20870730.7
(22) Date of filing: 18.09.2020
(51) Int. Cl.: C01D 15/02, H01M 8/008, C01D 15/08

(54) **RECOVERY METHOD FOR LITHIUM PRECURSOR**

(30) Priority: 02.10.2019 KR 20190121933
(71) Applicant: SK Innovation Co., Ltd., Seoul 03188 (KR)
(72) Inventor: HONG, Suk Joon, Daejeon 34124 (KR); KIM, Ji Min, Daejeon 34124 (KR); SON, Sung Real, Daejeon 34124 (KR); HA, Dong Wook, Daejeon 34124 (KR)
(74) Representative: Herrmann, Uwe
(86) International application number: PCT/KR2020/012632
(87) International publication number: WO 2021/066362

(57) **Abstract**

In a recovery method for a lithium precursor according to embodiments of the present invention, a cathode active material mixture including a lithium composite oxide is prepared. The cathode active material mixture is reacted with a carbon-based solid material in an atmosphere of an inert gas to form a preliminary precursor mixture containing lithium oxide. A washing treatment of the preliminary precursor mixture is performed to separate a lithium precursor. The lithium precursor can be recovered with high yield and high efficiency.

## Description

### CROSS-REFERENCE TO RELATED APPLICATION AND CLAIM OF PRIORITY

This application is a National Stage entry from International Application No. PCT/KR2020/012632 filed on September 18, 2020 which claims priority to the benefit of Korean Patent Application No. 10-2019-0121933 filed on October 2, 2019 in the Korean Intellectual Property Office, the entire contents of which are incorporated herein by reference.

### TECHNICAL FIELD

The present invention relates to a recovery method for a lithium precursor. More particularly, the present invention relates to a recovery method for a lithium precursor from a cathode active material mixture.

### BACKGROUND ART

A secondary battery which can be charged and discharged repeatedly has been widely employed as a power source of a mobile electronic device such as a camcorder, a mobile phone, a laptop computer, etc., according to developments of information and display technologies. The secondary battery includes, e.g., a lithium secondary battery, a nickel-cadmium battery, a nickel-hydrogen battery, etc., and the lithium secondary battery has been actively developed and applied due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape.

A lithium composite oxide may be used as a cathode active material of the lithium secondary battery. The lithium composite oxide may further contain a transition metal such as nickel, cobalt, manganese, etc.

The lithium composite oxide as the cathode active material may be prepared by reacting a lithium precursor and a nickel-cobalt-manganese (NCM) precursor containing nickel, cobalt and manganese.

As the above-mentioned high-cost valuable metals are used for the cathode active material, 20% or more of a production cost is required for manufacturing the cathode material. Further, as environmental protection issues have recently been highlighted, recycling methods for the cathode active materials are being researched. To recycle the cathode active material, regeneration of the lithium precursor from a wasted cathode with high efficiency and high purity is needed.

For example, Korean Published Patent Application No. 2015-0002963 discloses a method for recovering lithium using a wet method. However, since lithium is recovered by a wet extraction from a waste liquid remaining after extraction of cobalt, nickel, etc., a recovery ratio is excessively degraded and a large amount of impurities may be generated from the waste liquid.

### DETAILED DECRIPTIONS OF THE INVENTION

### [Technical Objective]

According to an aspect of the present invention, there is provided a recovery method for a lithium precursor from a cathode active material mixture with high purity and high yield.

### [Technical Means]

A recovery method for a lithium precursor according to embodiments of the present invention includes preparing a cathode active material mixture including a lithium composite oxide; reacting the cathode active material mixture with a carbon-based solid material in an atmosphere of an inert gas to form a preliminary precursor mixture containing lithium oxide; and performing a washing treatment of the preliminary precursor mixture to separate a lithium precursor.

In some embodiments, the formation of the preliminary precursor mixture may be performed at a temperature from 740 °C or higher.

In some embodiments, the formation of the preliminary precursor mixture may be performed at a temperature from 840 °C to 1,200 °C.

In some embodiments, lithium carbonate having an amount of 1/10 or less relative to a weight of lithium oxide may be generated in the formation of the preliminary precursor mixture,

In some embodiments, the carbon-based solid material may include at least one selected from the group consisting of carbon black, activated carbon, carbon fiber, carbon nanotube, graphene, natural graphite, artificial graphite, hard carbon and cokes.

In some embodiments, the inert gas may include argon or nitrogen.

In some embodiments, the formation of the preliminary precursor mixture may include dry mixing the cathode active material mixture and the carbon-based solid material.

In some embodiments, the dry mixing may be performed in a fluidized bed reactor.

In some embodiments, the formation of the preliminary precursor mixture may include reacting the cathode active material mixture and the carbon-based solid material in a weight ratio of 4:1 to 9:1.

In some embodiments, the washing treatment may include converting at least a portion of lithium oxide into lithium hydroxide.

In some embodiments, the preliminary precursor mixture may further include a transition metal-containing mixture, and a lithium hydroxide aqueous solution may be produced and the transition metal-containing mixture may be precipitated by the washing treatment.

In some embodiments, the washing treatment may be performed in a carbon dioxide-free (CO₂-free) atmosphere.

In some embodiments, the lithium composite oxide may be represented by Chemical Formula 1.

[Chemical Formula 1] LiₓNiₐCO_{b}M_{(1-a-b)}O_{y}

In Chemical Formula 1, M may be selected from the group consisting of Mn, Na, Mg, Ca, Ti, V, Cr, Cu, Zn, Ge, Sr, Ag, Ba, Zr, Nb, Mo, Al, Ga and B, and 0<x≤1.1, 2≤y≤2.02, 0.5≤a≤1, 0≤b≤0.5.

In some embodiments, the cathode active material mixture may be obtained from a waste lithium secondary battery.

In some embodiments, in the preparation of the cathode active material mixture includes separating a cathode including a cathode current collector, a cathode active material, a binder and a conductive material from the waste lithium secondary battery; and pulverizing the separated cathode or treating the separated cathode with an organic solvent to remove the cathode current collector.

In some embodiments, the atmosphere of the inert gas may not contain an oxidizing gas and a reductive gas.

### [Effects of the Invention]

According to exemplary embodiments of the present invention, a cathode active material mixture may be reacted with a carbon-based solid material in an inert gas atmosphere to obtain a high-purity lithium precursor with high yield and efficiency.

Lithium oxide may be generated by the reaction of the cathode active material and the carbon-based solid material, and lithium oxide may not be aggregated under a temperature condition of the reaction. Therefore, the lithium precursor may be efficiently separated without performing an additional pulverization process.

### [Brief Descriptions of the Drawings]

FIG. 1 is a schematic flow diagram for describing a recovery method for a lithium precursor in accordance with exemplary embodiments.
FIG. 2 is an X-ray diffraction (XRD) graph showing a generation of lithium oxide in accordance with exemplary embodiments.

### [Embodiments for Practicing the Invention]

According to exemplary embodiments of the present invention, a recovery method for a lithium precursor in which a cathode active material mixture including a lithium composite oxide is reacted with a carbon-based solid material in an inert gas atmosphere, and then washed is provided. The lithium precursor may be recovered with high yield and high efficiency.

Hereinafter, embodiments of the present invention will be described in detail with reference to the accompanying drawings. However, this is merely exemplary and the present invention is not limited to the specific embodiments described by way of example.

As used herein, the term "precursor" is used to comprehensively refer to a compound including a specific metal to provide the specific metal included in an electrode active material.

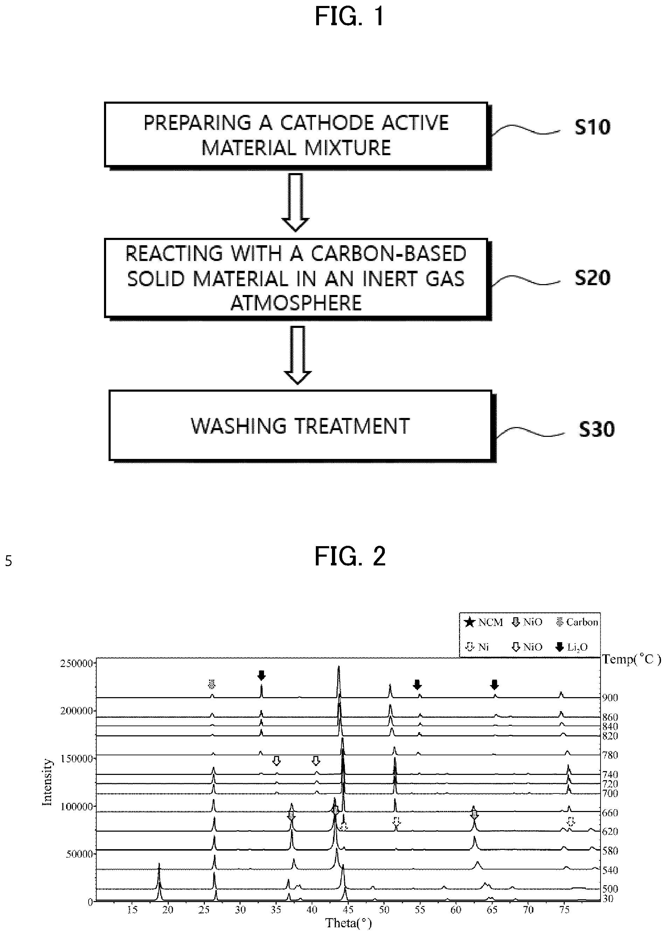

FIG. 1 is a schematic flow diagram for describing a recovery method for a lithium precursor in accordance with exemplary embodiments.

Referring to FIG. 1, a cathode active material mixture including a lithium composite oxide may be prepared (e.g., step S10). The cathode active material mixture may include a lithium-containing compound obtained or regenerated from an electric device or a chemical device. As a non-limiting example, the cathode active material mixture may include various lithium-containing compounds such as lithium oxide, lithium carbonate and lithium hydroxide.

In exemplary embodiments, the cathode active material mixture may be obtained from a waste lithium secondary battery. The waste lithium secondary battery may include a lithium secondary battery that cannot be substantially reused (charge/discharge), and may include, e.g., a lithium secondary battery having significantly lowered charge/discharge efficiency due to termination in life-span of the battery, or a lithium secondary battery damaged by a shock or a chemical reaction.

The waste lithium secondary battery may include an electrode assembly including a cathode, an anode, and a separation layer interposed between the cathode and the anode. The cathode and the anode may include a cathode active material layer and an anode active material layer coated on a cathode current collector and an anode current collector, respectively.

For example, the cathode active material included in the cathode active material layer may include an oxide containing lithium and a transition metal.

In some embodiments, the cathode active material may be an NCM-based lithium oxide including nickel, cobalt and manganese. The NCM-based lithium oxide as the cathode active material may be prepared by reacting a lithium precursor and an NCM precursor (e.g., an NCM oxide) with each other through a co-precipitation reaction.

However, embodiments of the present invention may also be commonly applied to a lithium-containing cathode material other than the cathode material including the NCM-based lithium oxide.

Accordingly, according to embodiments of the present invention, a method of regenerating lithium oxide (Li₂O) or lithium hydroxide (LiOH) as a lithium precursor with high selectivity may be provided.

For example, a waste cathode may be recovered by separating the cathode from the waste lithium secondary battery. The cathode may include the cathode current collector (e.g., aluminum (Al)) and the cathode active material layer as described above, and the cathode active material layer may include a conductive material and a binder together with the above-described cathode active material..

The conductive material may include, e.g., a carbon-based material such as graphite, carbon black, graphene, carbon nanotube, etc. The binder may include a resin material such as vinylidenefluoride-hexafluoropropylene copolymer (PVDF-co-HFP), polyvinylidenefluoride (PVDF), polyacrylonitrile, polymethylmethacrylate, etc.

The cathode active material mixture may be prepared from the recovered cathode. In some embodiments, the cathode active material mixture may be prepared in a powder form through a physical method such as pulverization treatment. As described above, the cathode active material mixture may include a lithium-transition metal oxide powder, e.g., an NCM-based lithium oxide powder (e.g., Li(NCM)O₂).

In some embodiments, the cathode recovered before performing the pulverization treatment may be heat-treated. Accordingly, detachment of the cathode current collector may be promoted during the pulverization treatment, and the binder and the conductive material may be at least partially removed. A temperature of the heat treatment may be in a range from, e.g., about 100 to 500 °C, preferably from about 350 to 450 °C.

In some embodiments, the cathode active material mixture may be obtained by immersing the recovered cathode in an organic solvent. For example, the recovered cathode may be immersed in the organic solvent to separate and remove the cathode current collector, and the cathode active material may be selectively extracted by a centrifugation.

Through the above-described processes, a cathode current collector component such as aluminum may be substantially completely separated and removed, and the cathode active material mixture in which a content of carbon-based components derived from the conductive material and the binder may be removed or reduced may be obtained.

For example, the lithium composite oxide may include an oxide including lithium and a transition metal. The transition metal may include, e.g., nickel, cobalt, manganese, etc.

In some embodiments, the lithium composite oxide may be represented by Chemical Formula 1 below.

[Chemical Formula 1] LiₓNiₐCo_{b}M_{(1-a-b)}O_{y}

In Chemical Formula 1, M may be selected from the group consisting of Mn, Na, Mg, Ca, Ti, V, Cr, Cu, Zn, Ge, Sr, Ag, Ba, Zr, Nb, Mo, Al, Ga and B, and 0<x≤1.1, 2≤y≤2.02, 0.5≤a≤1, 0≤b≤0.5.

In exemplary embodiments, the lithium composite oxide having a Ni content of 0.5 molar ratio or more may be effectively converted into lithium oxide.

The cathode active material mixture may be reacted with a carbon-based solid material in an inert gas atmosphere to form a preliminary precursor mixture (e.g., step S20). The preliminary precursor mixture may include lithium oxide.

The cathode active material mixture and the carbon-based solid material may be reacted with each other at a temperature of 740 °C or higher. In the temperature range, the lithium composite oxide included in the cathode active material mixture may be converted into lithium oxide. For example, when the reaction temperature is less than 740 °C, lithium oxide may not be formed and lithium carbonate may be formed.

In exemplary embodiments, the cathode active material mixture and the carbon-based solid material may be reacted with each other at a temperature of 740 °C or higher. In this case, an amount of lithium carbonate produced by the reaction may be 1/10 or less relative to a weight of lithium oxide. Accordingly, a lithium recovery yield through the process may be increased. Preferably, the reaction may be performed at a temperature of 840 °C or higher. In this case, lithium carbonate may not be substantially generated. The term "substantially not generated" may mean a formation in an amount of 1 part by weight or less based on 100 parts by weight of lithium oxide.

In some embodiments, the reaction temperature of the cathode active material mixture and the carbon-based solid material may be 1,200 °C or less. If the reaction temperature is higher than 1,200 °C, the cathode active material mixture, a transition metal-containing mixture, lithium oxide, etc., may react with each other to form by-products. Accordingly, purity and yield of the lithium precursor may be degraded.

In exemplary embodiments, the carbon-based solid material may include a crystalline or an amorphous carbon material. For example, the carbon-based solid material may include at least one selected from the group consisting of carbon black, activated carbon, carbon fiber, carbon nanotube, graphene, natural graphite, artificial graphite, hard carbon and cokes. Preferably, carbon black or activated carbon may effectively react with the cathode active material mixture. The carbon-based solid material may be oxidized while being reacted with the lithium composite oxide, and may promote decomposition of the lithium composite oxide.

In exemplary embodiments, the inert gas may include argon or nitrogen. For example, an inner space of the reactor in which the cathode active material mixture and the carbon-based solid material react may be substituted with the inert gas. Accordingly, the inner space of the reactor may be formed in an inert gas atmosphere. For example, the substitution may include purging.

In some embodiments, the inert gas atmosphere may not include an oxidizing gas or a reductive gas. For example, the inner space of the reactor may include an atmosphere filled only with the inert gas. Accordingly, the formation of by-products such as lithium carbonate, or the like formed by, e.g., a reaction between a carbon dioxide gas that is a reductive gas and a lithium component may be prevented.

For example, the oxidizing gas may include an oxygen gas, and the reductive gas may include a hydrogen gas, a carbon monoxide gas, a carbon dioxide gas, etc.

In exemplary embodiments, the cathode active material mixture and the carbon-based solid material may be dry-mixed. For example, a liquid material such as a solvent may not be added into the reactor. The cathode active material mixture and the carbon-based solid material may be stirred in the reactor.

In exemplary embodiments, the reactor may include a fluidized bed reactor. For example, the dry mixing may be performed in a fluidized bed reactor. The cathode active material mixture and the carbon-based solid material may be introduced into the fluidized bed reactor and reacted in the fluidized bed reactor.

For example, the inert gas may be injected into a lower portion of the fluidized bed reactor, so that the inert gas may pass from a bottom of the cathode active material mixture. In this case, a cyclone may be formed from the bottom of the fluidized bed reactor to effectively mix the cathode active material mixture and the carbon-based solid material.

In exemplary embodiments, the cathode active material mixture and the carbon-based solid material may be mixed in a weight ratio from 4:1 to 9:1. If an amount of the cathode active material mixture is less than 4:1, the yield of lithium oxide may be degraded. If the amount of the cathode active material mixture is greater than 9:1, the conversion to lithium oxide from the cathode active material mixture may be insufficient. Preferably, the cathode active material mixture and the carbon-based solid material may be mixed in a weight ratio from 5:1 to 9:1.

In exemplary embodiments, the preliminary precursor mixture may further include the transition metal-containing mixture. The transition metal-containing mixture may include a transition metal, a transition metal-containing oxide, or the like. The transition metal may include nickel, cobalt, manganese, etc.

A transition metal component of the transition metal-containing mixture may be derived from the lithium composite oxide. For example, in a reaction in which the lithium composite oxide is converted into lithium oxide, the transition metal component may be separated to form the transition metal-containing mixture. In this case, the lithium composite oxide may be decomposed to form a mixture containing lithium oxide and the transition metal.

The preliminary precursor mixture may be washed with water (e.g., step S30). The lithium oxide in the preliminary precursor mixture may be separated by the washing treatment to provide a lithium precursor.

In exemplary embodiments, in the washing treatment, at least a portion of the lithium oxide may be dissolved in water to be converted into lithium hydroxide. For example, lithium hydroxide is water-soluble, so that an aqueous solution of lithium hydroxide may be generated.

In this case, lithium oxide may be selectively separated from the preliminary precursor mixture. Components other than lithium oxide in the preliminary precursor mixture may be precipitated at a bottom of the aqueous solution (the bottom of the reactor). For example, the transition metal-containing mixture may be precipitated.

The transition metal-containing mixture may be separated by a filtration to obtain the lithium precursor including a high-purity lithium hydroxide.

For example, the lithium precursor in the form of lithium hydroxide or lithium oxide may be recovered by separating the aqueous lithium hydroxide solution, and evaporating water or crystallizing through recrystallization, fractional crystallization, etc.

In some embodiments, the transition metal-containing mixture separated by the precipitation may be treated with an acid solution to form precursors in the form of an acid salt of each transition metal. In an embodiment, sulfuric acid may be used as the acid solution. In this case, NiSO₄, MnSO₄ and CoSO₄ may be recovered as transition metal precursors.

In some embodiments, the washing treatment may be performed under a condition from which carbon dioxide (CO₂) is excluded. For example, the washing treatment may be performed in a CO₂-free atmosphere (e.g., an air atmosphere from which CO₂ is removed), so that regeneration of lithium carbonate may be prevented.

In an embodiment, water provided during the washing treatment may be purged using a CO₂-deficient gas (e.g., nitrogen-purged) to create the CO₂-free atmosphere.

In a comparative example, the lithium composite oxide is reduced by hydrogen, so that lithium hydroxide may be formed. A melting point of lithium hydroxide is 462 °C, and lithium hydroxide may be partially melted under a temperature condition (450 to 700°C) of the hydrogen reductive treatment. Accordingly, in a cooling process after the hydrogen reductive treatment, lithium hydroxide may be aggregated with each other or aggregated with the transition metal-containing mixture. In this case, a pulverization of the aggregated lithium hydroxide may be required in order to effectively separate lithium hydroxide.

According to exemplary embodiments, the lithium component of the lithium composite oxide may be converted into lithium oxide. The melting point of lithium oxide is about 1,438°C, and the lithium composite oxide and the carbon-based solid material may react at a temperature lower than the melting point of lithium oxide. Accordingly, lithium oxide may not be agglomerated, and lithium oxide may be efficiently separated without an additional pulverization process.

Hereinafter, preferred embodiments are proposed to more concretely describe the present invention. However, the following examples are only given for illustrating the present invention and those skilled in the related art will obviously understand that these examples do not restrict the appended claims but various alterations and modifications are possible within the scope and spirit of the present invention. Such alterations and modifications are duly included in the appended claims.

### Experimental Example 1

A cathode was separated from a waste lithium secondary battery, and a current collector in the cathode was removed to prepare a cathode active material mixture.

The cathode included a cathode active material layer formed of a composition including LiNi_{0.8}Co_{0.1}Mn_{0.1}O₂ as a cathode active material, a Denka Black conductive material and a PVDF binder in a weight ratio of 92:5:3.

Results of XRD (X-Ray Diffraction Spectroscopy) analysis on the cathode active material mixture at room temperature (30 °C) is shown in FIG. 2.

Additionally, the cathode active material mixture (25 g) and carbon black (5 g) having a particle diameter of about 0.5 µm were added into a reactor substituted with an argon gas, and then reacted at a temperature in a range from 500 to 900 °C for 60 minutes while being stirred. Results of XRD analysis (X-Ray Diffraction Spectroscopy) on samples reacted at each temperature are shown in FIG. 2. Referring to FIG. 2, detection of lithium oxide started at a temperature from 740 °C.

### Experimental Example 2

A cathode was separated from a waste lithium secondary battery, and a current collector in the cathode was removed to prepare a cathode active material mixture.

The cathode included a cathode active material layer formed of a composition including LiNi_{0.6}Co_{0.2}Mn_{0.2}O₂ as a cathode active material, a Denka Black conductive material and a PVDF binder in a weight ratio of 92:5:3. The cathode active material mixture (25 g) and carbon black (3 g) having a particle diameter of about 0.5 µm were added, and then a temperature was raised from 600 °C to 900 °C.

Samples in which the cathode active material mixture and carbon black reacted at temperatures between 600°C and 900°C were extracted, and contents of lithium compounds in the sample were determined from a crystal structure analysis by a Rietveld method based on XRD analysis, and fractions according to material phases were obtained as shown in Table 1 below.

**[Table 1]**

| Reaction Temperature | Contents in the sample (wt%) | |
|---|---|---|
| | Li₂CO₃ | Li₂O |
| 600°C | 12.1 | - |
| 840°C | 1.1 | 10.2 |
| 900°C | - | 11.8 |

Referring to Table 1, a Li₂CO₃ material phase was generated at 600 °C, but a Li₂O material phase was only generated at 900 °C.

## Claims

1. A recovery method for a lithium precursor, comprising:
preparing a cathode active material mixture including a lithium composite oxide;
reacting the cathode active material mixture with a carbon-based solid material in an atmosphere of an inert gas to form a preliminary precursor mixture containing lithium oxide; and
performing a washing treatment of the preliminary precursor mixture to separate a lithium precursor.

2. The recovery method for a lithium precursor of claim 1, wherein the formation of the preliminary precursor mixture is performed at a temperature from 740 °C or higher.

3. The recovery method for a lithium precursor of claim 1, wherein the formation of the preliminary precursor mixture is performed at a temperature from 840 °C to 1,200 °C.

4. The recovery method for a lithium precursor of claim 3, wherein lithium carbonate having an amount of 1/10 or less relative to a weight of lithium oxide is generated in the formation of the preliminary precursor mixture,

5. The recovery method for a lithium precursor of claim 1, wherein the carbon-based solid material comprises at least one selected from the group consisting of carbon black, activated carbon, carbon fiber, carbon nanotube, graphene, natural graphite, artificial graphite, hard carbon and cokes.

6. The recovery method for a lithium precursor of claim 1, wherein the inert gas comprises argon or nitrogen.

7. The recovery method for a lithium precursor of claim 1, wherein the formation of the preliminary precursor mixture comprises dry mixing the cathode active material mixture and the carbon-based solid material.

8. The recovery method for a lithium precursor of claim 7, wherein the dry mixing is performed in a fluidized bed reactor.

9. The recovery method for a lithium precursor of claim 1, wherein the formation of the preliminary precursor mixture comprises reacting the cathode active material mixture and the carbon-based solid material in a weight ratio of 4:1 to 9:1.

10. The recovery method for a lithium precursor of claim 1, wherein the washing treatment comprises converting at least a portion of lithium oxide into lithium hydroxide.

11. The recovery method for a lithium precursor of claim 1, wherein the preliminary precursor mixture further comprises a transition metal-containing mixture, and
a lithium hydroxide aqueous solution is produced and the transition metal-containing mixture is precipitated by the washing treatment.

12. The recovery method for a lithium precursor of claim 1, wherein the washing treatment is performed in a carbon dioxide-free (CO₂-free) atmosphere.

13. The recovery method for a lithium precursor of claim 1, wherein the lithium composite oxide is represented by Chemical Formula 1:
[Chemical Formula 1] LiₓNiₐCo_{b}M_{(1-a-b)}O_{y}
wherein, in Chemical Formula 1, M is selected from the group consisting of Mn, Na, Mg, Ca, Ti, V, Cr, Cu, Zn, Ge, Sr, Ag, Ba, Zr, Nb, Mo, Al, Ga and B, and 0<x≤1.1, 2≤y≤2.02, 0.5≤a≤1, 0≤b≤0.5.

14. The recovery method for a lithium precursor of claim 1, wherein the cathode active material mixture is obtained from a waste lithium secondary battery.

15. The recovery method for a lithium precursor of claim 14, wherein preparing the cathode active material mixture comprises:
separating a cathode including a cathode current collector, a cathode active material, a binder and a conductive material from the waste lithium secondary battery; and
pulverizing the separated cathode or treating the separated cathode with an organic solvent to remove the cathode current collector.

16. The recovery method for a lithium precursor of claim 1, wherein the atmosphere of the inert gas does not contain an oxidizing gas and a reductive gas.
